# EUROPÄISCHE PATENTSCHRIFT

(11) **EP 2 604 882 B1**
(45) Veröffentlichungstag und Bekanntmachung des Hinweises auf die Patenterteilung: **12.08.2020**
(21) Anmeldenummer: 12008303.5
(22) Anmeldetag: 12.12.2012
(51) Int. Cl.: F16D 63/00, F16D 66/00, F16D 121/06, F16D 125/66

(54) **Brems- und/oder Klemmvorrichtung mit Betriebszustandsüberwachung**
Braking and/or clamping device with monitoring of operational state
Dispositif de freinage et/ou de serrage avec surveillance de l'état de fonctionnement

(30) Priorität: 14.12.2011 DE 102011121890
(43) Veröffentlichungstag der Anmeldung: 19.06.2013
(73) Patentinhaber: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang

(56) Entgegenhaltungen:
- DE-A1- 10 105 692
- DE-A1-102010 021 859
- DE-C1- 10 207 605

## Beschreibung

Die Erfindung betrifft eine Brems- und/oder Klemmvorrichtung eines an mindestens einer Führungsschiene geführten Schlittens, wobei die Vorrichtung mindestens ein über ein Getriebe betätigbares Reibgehemme umfasst, das wenigstens eine, in einem Vorrichtungsgehäuse gelagerte, an die Führungsschiene anpressbare Reibbacke aufweist und wobei das mit Hilfe von Fremdenergie bewegte Getriebe zur Be- und zur Entlastung des Reibgehemmes pro Be- und Entlastungsrichtung mittels mindestens eines Stellgliedes oder mittels eines Federsystems, das mindestens ein Federelement umfasst, bewegbar ist.

Aus der DE 102 07 605 C1 ist eine vergleichbare Brems- und/oder Klemmvorrichtung bekannt. Die einzelnen Reibgehemme werden mit Hilfe eines Federspeichers und eines Schiebekeilgetriebes zugestellt. Zum Öffnen der Reibgehemme werden pneumatisch betätigte Zylinder-Kolben-Einheiten verwendet. Durch eine Überwachung der Druckluft der Zylinder-Kolben-Einheiten oder deren Druckluftzuleitungen wird auf die Offenstellung der Reibgehemme geschlossen.

Die DE 101 05 692 A1 beschreibt einen Linearführungsapparat, dessen Gehäuse eine Führungsschiene beidseitig umgreift. Im Gehäuse sind zwei einander gegenüberliegende Zylinder-Kolben-Einheiten angeordnet, die beim Bremsen einen Reibbelag hydraulisch gegen die Führungsschiene pressen. Zwischen mindestens einem Kolben und dem dazu gehörenden Reibbelag ist eine einen Dehnmeßstreifen enthaltende Kraftmeßdose angeordnet.

Der vorliegenden Erfindung liegt die Problemstellung zugrunde, eine Brems- und/oder Klemmvorrichtung so mit einem oder mehreren Sensoren auszustatten, dass der Betriebszustand der Vorrichtung zu jedem Zeitpunkt sicher und direkt erfasst sowie wiedergegeben werden kann.

Diese Problemstellung wird mit den Merkmalen des Patentanspruchs 1 gelöst. Dazu weist das elastisch verformbare Vorrichtungsgehäuse oder elastisch verformbare, angebaute Teile des Vorrichtungsgehäuses mindestens eine Oberflächenzone auf, die sich beim Aufbringen einer Brems- und oder Klemmkraft dehnen, stauchen oder tordieren. In mindestens einer der verformbaren Oberflächenzonen ist mindestens ein Dehnmeßstreifen angeordnet.

Die einzelne Brems- und/oder Klemmvorrichtung umfasst mindestens ein Reibgehemme, das direkt oder über ein Getriebe betätigbar ist. Das Reibgehemme wirkt über eine Reibbacke auf eine Führungsschiene, auf der ein Maschinen- oder Messgeräteschlitten gelagert und geführt ist, der diese Vorrichtung trägt. Das einzelne Reibgehemme entwickelt seine Brems- und/oder Klemmwirkung beispielsweise durch das Freisetzen von in einem Federspeicher gespeicherten Federenergie, die über das Schiebekeilgetriebe auf die Reibbacke übertragen wird.

Das Reibgehemme kann hierbei direkt angetrieben werden, z.B. mittels einer hydraulischen Zylinder-Kolben-Einheit. Bei Stellgliedern kleinerer Schubkraft werden zwischen das Stellglied und das Reibgehemme Getriebe eingebaut. Das können z.B. Schiebekeilgetriebe, Exzentergetriebe, Hebelgetriebe, Spindelgetriebe und dergleichen sein.

Die Führungsschienen, an denen die Reibbacken zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden.

Zur Betriebszustandsüberwachung werden bei der vorliegenden Erfindung innerhalb der Brems- und/oder Klemmvorrichtung betriebsbedingte elastische Verformungen erfasst und ausgewertet. Dazu werden Sensoren in Form von Dehnmeßstreifen am Vorrichtungsgehäuse oder an Anbauten des Vorrichtungsgehäuses angeordnet. Die einzelnen Dehnmeßstreifen werden dort vorwiegend in Zonen angeordnet, in denen belastungsbedingte Verformungen reproduzierbar und ggf. sogar einachsig auftreten. Die auftretenden Brems- und oder Klemmkräfte dehnen, stauchen oder tordieren die entsprechenden verformbaren Oberflächenzonen z.B. im ein- bis dreistelligen Mikrometerbereich.

Bei Brems- und/oder Klemmvorrichtungen, deren Vorrichtungsgehäuse sich beim Brems- und/oder Klemmvorgang elastisch verformen, sind elastisch nachgiebige Vorrichtungsgehäusezonen zur Dehnmeßstreifenanbringung besonders geeignet. Diese Zonen sind in der Regel großflächig und gut zugänglich. Auch gestaltet sich die Verdrahtung der Dehnmeßstreifen einfach, da hier zwischen den die Auswerteelektronik tragenden Platinen und den Dehnmeßstreifen keine nennenswerten Relativbewegungen stattfinden.

Bei Vorrichtungsgehäusen - wie z.B. dem c-förmigen Gehäuse des Ausführungsbeispiels - ist problemlos ein am Vorrichtungsgehäuse adaptierbarer Verformungsrahmen zur Aufnahme der Dehnmeßstreifen und der Auswerteelektronik verwendbar, da auf ihn die Vorrichtungsgehäuseverformung mit einfachen Mitteln übertragbar ist. Die gesamte Betriebszustandsüberwachung ist in diesem Fall als modulares Anbauteil am Vorrichtungsgehäuse anbringbar.

Ein von den wärmebelasteten Reibgehemmen und Antrieben etwas entfernt gelegener Verformungsrahmen, einschließlich seines Elektronikgehäuses, ermöglicht die wirksame Anbringung von Dehnmeßstreifen für die Temperaturkompensation.

Weitere Einzelheiten der Erfindung ergeben sich aus den Unteransprüchen und der nachfolgenden Beschreibung einer schematisch dargestellten Ausführungsform.
- Figur 1:: Brems- und/oder Klemmvorrichtung mit externer Sensoreinheit;
- Figur 2:: Verformungsrahmen mit Dehnmeßstreifen;
- Figur 3:: Verformungsrahmen mit Dehnmeßstreifen, wie Figur 2, jedoch von unten;
- Figur 4:: Brems- und/oder Klemmvorrichtung im Längsschnitt, unbetätigt;
- Figur 5:: wie Figur 4, jedoch betätigt;
- Figur 6:: Vorderansicht der Brems- und/oder Klemmvorrichtung.

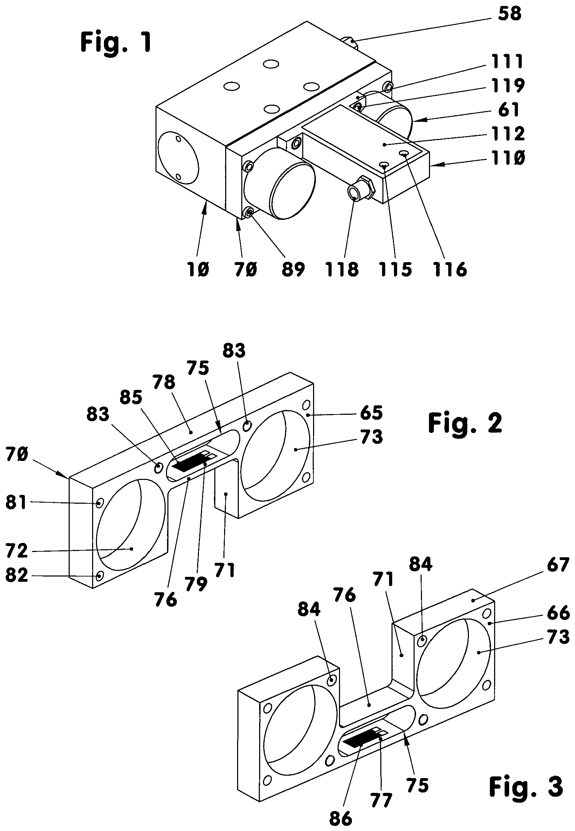

Die Figuren 1, 4 und 5 zeigen eine Brems- und/oder Klemmvorrichtung, wie sie beispielsweise in vielen Horizontal- oder Vertikalschlitten u.a. in Werkzeug- und Messmaschinen verwendet wird. Die Vorrichtungen der vorliegenden Ausführungsform sind hierbei am entsprechenden Geräteschlitten (9) so angeordnet, dass sie die - die Schlittenlängsführung vorgebende - Führungsschiene (1), z.B. mit zwei Reibgehemmen (90), umgreifen. Die Vorrichtung hat dazu ein Gehäuse (10), in dem zwei einander gegenüberliegende Reibgehemme (90) beidseits einer Führungsschiene (1) angeordnet sind. An der Vorderseite (18) des Gehäuses (10) ist ein Verformungsrahmen (70) angeflanscht, in dessen Inneren mehrere Dehnmeßstreifen (85, 86) angeordnet sind, vgl. Figuren 2 und 3. Vor dem Verformungsrahmen (70) ist ein Elektronikgehäuse (110) montiert, das die entsprechende Auswerteelektronik zur Interpretation der Verformung aufnimmt.

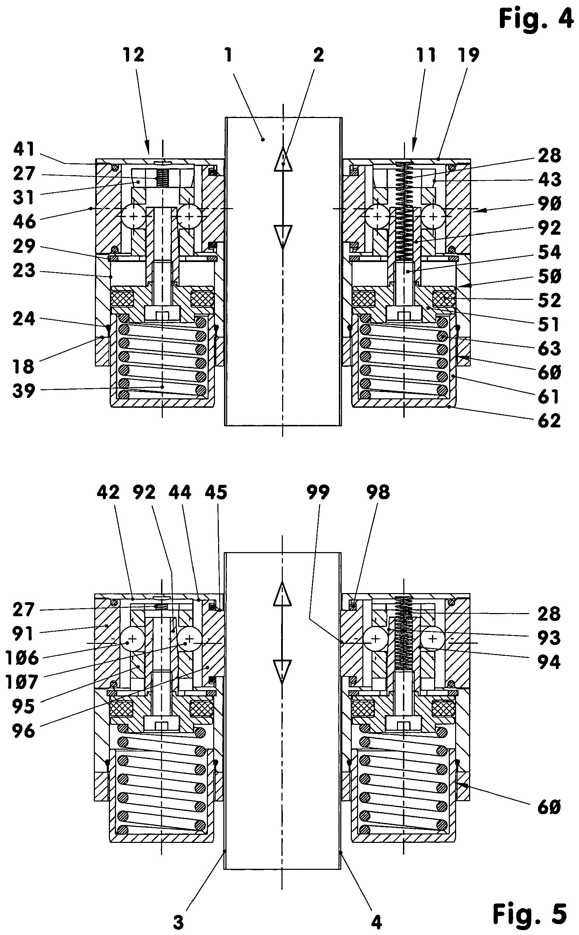

In den Figuren 4 und 5 ist u.a. ein Abschnitt einer Führungsschiene (1) dargestellt. Die Führungsschiene (1) besteht aus einem Stab mit einem z.B. annähernd rechteckigen Querschnitt. Sie kontaktiert über ihre Bodenfläche (7) z.B. das sie tragende Maschinenbett (5). Beidseitig hat sie jeweils eine Führungsfläche (3, 4), an der sich beim Bremsen die Reibbacken (99) der Reibgehemme (90) abstützen.

Die Führungsschiene (1) wird von einem Gehäuse (10) beidseitig umgriffen. Im Gehäuse (10) sind zwei gegeneinander Brems- und Klemmkräfte erzeugende Vorrichtungen integriert. Das im Prinzip c-förmige Gehäuse (10) besteht aus einem Quader, der quer zu seiner Längsausdehnung eine Umgriffsnut (14) aufweist, die einen rechteckförmigen Querschnitt hat. Die Nutbreite ist wenige Millimeter breiter als die Führungsschienenbreite in dem vom Gehäuse (10) umgriffenen Bereich. Die Nuttiefe entspricht z.B. 60% der Gehäusehöhe.

Das Gehäuse (10) hat z.B. gemäß Figur 4 - quer zur Führungslängsrichtung (2) - eine Gesamtbreite, die ca. der dreifachen Breite der Führungsschiene entspricht. Die Gesamthöhe des Gehäuses (10) beträgt z.B. 145% der Führungsschienenhöhe. Die Länge des Gehäuses (10) entspricht beispielsweise dem 1,2-fachen der Gehäusehöhe.

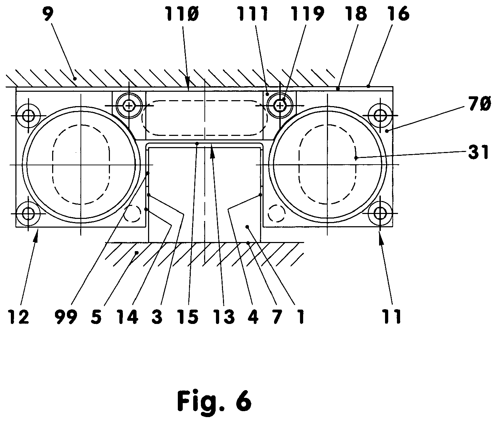

Das Gehäuse (10) hat nach Figur 6 eine rechte (11) und eine linke Gehäusezone (12), wobei beide Gehäusezonen (11, 12) jeweils neben der Führungsschiene (1) liegen. Beide Zonen (11, 12) sind im z.B. einteiligen Gehäuse (10) über eine Brückenzone (13) miteinander verbunden. Die Brückenzone (13) ist u.a. auch der Gehäusebereich, über den die Vorrichtung am entsprechenden Schlitten (9) befestigt wird. Jede Gehäusezone (11, 12), vgl. Figuren 4 und 5, weist eine mehrstufige Durchgangsbohrung (23, 31) auf, deren Mittellinie (39) parallel zur Führungslängsrichtung (2) orientiert ist, vgl. Figur 4. Die Durchgangsbohrung setzt sich aus einer Führungsflächenbohrung (23)und einer Käfigsitzausnehmung (31) zusammen.

Im Bereich der Öffnung der Führungsflächenbohrung (23) befindet sich ein Feingewinde und eine einen Quetschring (24) aufnehmende Nut.

Am anderen Ende der Führungsflächenbohrung (23) befindet sich als Anschlag ein Sicherungsring (29). Hinter dem Sicherungsring (29) liegt die Käfigsitzausnehmung (31). Sie erstreckt sich über den gesamten Bereich einer quer zur Stufenbohrung (23, 31) vorhandenen Gehemmebohrung (41). Die Ausnehmung (31) ist ein Langloch, dessen Breite geringfügig größer ist als die eines dort eingebauten Käfigs (95). Die maximale Höhe der Ausnehmung (31) entspricht dem Durchmesser der Führungsflächenbohrung (23). Die Ausnehmung (31), vgl. in Figur 6 die gestrichelte Linie in der Gehäusezone (11), hat im Querschnitt an den nicht geradlinigen Flanken eine ovale Kontur, die im oberen und unteren Bereich abschnittsweise der Kontur der Führungsflächenbohrung folgt.

Die quer zur Stufenbohrung (23, 31) verlaufende Gehemmebohrung (41) hat eine Mittellinie (46), die die Mittellinien (39) der Stufenbohrungen im Ausführungsbeispiel im Abstand von z.B. 1 mm kreuzt. Beispielsweise schneidet die Mittellinie (46) die Mittellinie (2) der Führungsschiene (1).

Jede Gehemmebohrung (41) hat drei abgestufte Bereiche, vgl. Figur 5. Von der Gehäuseaußenseite her sind das eine Hauptbohrung (42), eine Druckstückführungsbohrung (44) und eine Austrittsbohrung (45). Die Hauptbohrung (42) schneidet sich mit der Käfigsitzausnehmung (31). In den Gehäusezonen (11, 12), siehe Figur 4, kann man die Durchdringungslinien (43) erkennen.

In diesem Bereich sitzt der Käfig (95), der zwei Zylinderrollen (106, 107) lagert. Beide Zylinderrollen (106, 107) liegen an einem Schiebekeil (92) eines Schiebekeilgetriebes an. Die außenliegende Zylinderrolle (106) stützt sich an einer Einstellschraube (91) ab, während die innenliegende Zylinderrolle (107) an einem hier unbelasteten Druckstück (96) anliegt.

Im Bereich der Einstellschraube (91) trägt die Hauptbohrung (42) ein Feingewinde. Die Einstellschraube (91) ist eine zylindrische Scheibe, die an der äußeren Stirnfläche Bohrungen für den Eingriff eines Zapfenschlüssels aufweist, vgl. Figur 1. Sie hat ein Außengewinde, das in einer Ringnut endet. In der Nut ist ein Quetschring als Schraubensicherung eingelassen.

Das Druckstück (96) ist ein zylindrischer Kolben mit einer angeformten Kolbenstange. Die Kolbenstange ragt bei betätigtem Reibgehemme (90) aus der Austrittsbohrung (45) heraus. Am Übergang der Kolbenstange zum Kolben befindet sich eine Stirnnut, in der ein elastischer Rückhubring (98) mit z.B. rechteckigem Einzelquerschnitt sitzt.

Vor der außenseitigen Stirnfläche des Druckstückes (96) ist in der Umgriffsnut (14) eine Reibbacke (99) - als vorderes Teil des Druckstückes (96) - angeordnet, vgl. Figur 6. In die Reibbacke (99) ist beispielsweise ein aus dieser zumindest geringfügig herausragender Reibbelag eingepresst und dort ggf. verklebt oder verlötet. Für den Reibbelag kann ein pulvermetallurgisch hergestellter Reibwerkstoff auf Bronzebasis verwendet werden. Der Reibwerkstoff enthält z.B. zusätzlich keramische Bestandteile.

Zwischen dem Druckstück (96) und der Einstellschraube (91) ist der Schiebekeil (92) umgeben von dem Käfig (95) angeordnet. Der Schiebekeil (92) ist z.B. ein trapezförmiger Körper mit rechteckigen Querschnitten. Er ist starr, z.B. mittels einer Schraube (54), an einem in der Führungsflächenbohrung (23) gelagerten Führungskolben (51) befestigt. Der Schiebekeil (92), der auch die Kolbenstange des mit einer Kolbendichtung (52) ausgestatteten Führungskolbens (51) darstellt, hat u.a. eine Stütz-(94) und eine Keilfläche (93). Beide Flächen (93, 94) sind rechteckig und z.B. plan. Die jeweils dem Druckstück (96) zugewandte Keilfläche (93) schließt mit diesem z.B. einen spitzen Winkel von 1 bis 5 Winkelgraden ein. Die Stützfläche (94) verläuft parallel zur Stirnfläche der benachbarten Einstellschraube (91). Beispielsweise verjüngen sich die Querschnitte des Schiebekeils (92) linear mit zunehmendem Abstand weg von der Kolbenstangenseite des Führungskolbens (51).

Der den Schiebekeil (92) umgebende Käfig (95) hat eine Querschnittsform, die mit Spiel in die Käfigsitzausnehmung (31) passt. Er hat mittig - parallel zur Führungslängsrichtung - zur Aufnahme des Schiebekeils (92) einen rechteckigen Durchbruch, der geringfügig größer ist als der größte Querschnitt des Schiebekeils (92). Quer zu diesem Durchbruch befindet sich außermittig ein ebenfalls rechteckiger Durchbruch. Letzterer dient der Aufnahme der Zylinderrollen (106, 107).

Im Feingewinde der Führungsflächenbohrung (23) ist die Federbüchse (61) des Federspeichers (60) eingeschraubt. In der Federbüchse (61), die einen planen Boden (62) hat, ist die Schraubendruckfeder (63) gelagert, die bei Bedarf auf die Vorderseite des Führungskolbens (51) wirkt. In der Federbüchse (61) befindet sich eine mit der Umgebung korrespondierende Entlastungsbohrung, um den druckluftbelasteten Arbeitshub des Führungskolbens (51) nicht zu behindern.

Während des Normalbetriebes des die Vorrichtung tragenden Schlittens (9) befindet sich die Vorrichtung entsprechend der Figur 4 im unbetätigten Zustand. Der druckluftbelastete, die Schraubendruckfeder (63) spannende Führungskolben (51) nutzt die im Gehäuse (10) gelegene Stirnfläche der Federbüchse (61) als Anschlag. Der Schiebekeil (92) befindet sich in seiner hinteren Position. Die Zylinderrollen (106, 107) sitzen unbelastet im Käfig (95). Der einzelne Käfig (95) wird jeweils von zwei Schraubenfedern (27), die in nichtdargestellten Käfigbohrungen eingesteckt sind und sich am Boden der Käfigsitzausnehmung (31) abstützen, gegen einen als Anschlag dienenden Sicherungsring (29) gedrückt. In den Figuren 4 und 5 sind die räumlich oben liegenden Schraubenfedern (28) - auf der jeweils linken Figurenseite - nur zur Verdeutlichung weggelassen. Das jeweilige Druckstück (96) liegt bei weitgehend entlastetem, aber dennoch anliegendem Rückhubring (98) in der Regel nicht an der Reibbacke (99) an. Der Rückhubring (98) hat noch mindestens so viel Vorspannung, dass das Druckstück (96), die Zylinderrollen (106, 107) und der Schiebekeil (92) spielfrei an der Einstellschraube (91) anliegen.

Werden nun bei der Vorrichtung nach Figur 5 die unter Druckluft stehende Führungsflächenbohrung (23), Käfigsitzausnehmung (31) und Gehemmebohrung (41) entlüftet, wird ein Bremsvorgang bzw. ein Festklemmen eingeleitet. Die einzelne sich entspannende Schraubendruckfeder (63) des jeweiligen Federspeichers (60) schiebt mittels des Führungskolbens (51) den Schiebekeil (92) in die Käfigsitzausnehmung (31) hinein, vgl. Figur 5. Solange die Kraft der jeweiligen Schraubendruckfeder (63) wirkt, liegen die Reibbacken (99) an der Führungsschiene (1) an.

Zum Lösen der Klemmung werden die Bohrungen (23, 31, 41) mit Druckluft beaufschlagt, womit die Führungskolben (51) die Schiebekeile (92) zur Entlastung der Reibgehemme (90) zurückziehen und zugleich die Federspeicher (60) wieder spannen.

Während der Brems- und/oder Klemmbewegung pressen sich die Reibbelege (99) mit so großer Kraft gegen die Führungsschiene (1), dass sich das Vorrichtungsgehäuse (10) meßbar elastisch verformt. Hierbei haben die beiden Gehäusezonen (11) und (12), vgl. Figur 6, das Bestreben, sich voneinander zu entfernen. Dadurch wird die oberhalb der Führungsschiene (1) gelegene Brückenzone (13), der hier die Funktion eines klassischen Biegebalkens zuteil wird, auf Biegung belastet. Die Unterseite (15) der Brückenzone (13) wird teilweise bis in den dreistelligen Mikrometerbereich gedehnt, während die Oberseite (16) des Gehäuses z.B. im zweistelligen Mikrometerbereich gestaucht wird.

Die sich als Dehnung oder Stauchung auswirkende Formänderung ist mit Hilfe von Dehnmeßstreifen und einer nachgeordneten Auswerteelektronik erfassbar. Die einzelnen Dehnmeßstreifen erfahren durch die Dehnung oder Stauchung der entsprechenden Gehäusebereiche eine Widerstandsänderung, die nach entsprechender Aufbereitung als Kraftänderung ausgebbar ist. Die Dehnmeßstreifen werden dabei z.B. in Viertel- Halb- oder Vollbrücken verschaltet.

Unabhängig vom Ausführungsbeispiel können, speziell an der Unterseite (15) der Brückenzone (13), Dehnmeßstreifen quer zur Führungslängsrichtung (2) angeordnet werden. An dieser Unterseite (15) sind sie geschützt vor möglichen Beschädigungen. Dort sind sie zudem beim Einbau der Vorrichtung in die jeweilige Maschine nicht im Weg.

Gemäß dem Ausführungsbeispiel sind die Dehnmeßstreifen in einem am Vorrichtungsgehäuse (10) anbaubaren Teil, einem speziellen Verformungsrahmen (70), integriert. Der Verformungsrahmen (70), der an der vorderen Stirnseite (18) des Gehäuses (10) befestigt ist, ist im Wesentlichen eine quaderförmige Platte, die mit z.B. vier größeren (71, 72, 73, 75) und acht kleineren Ausnehmungen (81, 82, 83, 84) versehen ist. Zwei formgleiche, kreisrunde Ausnehmungen (72, 73) dienen als Durchlass für die Federbüchsen (61). Ihr Innendurchmesser ist ca. zwei zehntel Millimeter größer als der Außendurchmesser der Federbüchsen (61). Eine weitere Ausnehmung ist die Rechtecknut (71), mit der der Verformungsrahmen (70) die Führungsschiene (1) umgibt.

Nach Figur 2, in der die Vorderseite (65) des Verformungsrahmens (70) dargestellt ist, befindet sich oberhalb der Rechtecknut (71) eine langlochartige Sensorenausnehmung (75). An den planen Innenseiten (77, 79) dieser Ausnehmung (75) sind Dehnmeßstreifen (85, 86) aufgeklebt.

Durch die Form und die Anordnung der Sensorenausnehmung (75) im Verformungsrahmen (70) entstehen dort ein Drucksteg (78) und ein Zugsteg (76). Beide Stege (76, 78) haben jeweils die Form eines Quaders. Sie sind gemäß dem Ausführungsbeispiel 18 mm lang und 8 mm breit. Der nach Figur 2 oben liegende Drucksteg (78) hat eine Wandstärke von 2 mm, während der darunter liegende Zugsteg (76) eine Wandstärke von 1,5 mm aufweist.

Der Verformungsrahmen (70) hat im seitlichen Außenbereich vier Befestigungsbohrungen (81, 82). Mit Hilfe der Zylinderschrauben (89) ist er über diese am Gehäuse (10) verschraubt. Nach Figur 3 befindet sich im Verformungsrahmen (70) beidseits der Rechtecknut (71), in der Nähe der Unterseite (67) des Verformungsrahmens (70), je eine von der Rückseite (66) gebohrte Sacklochbohrung (84). In diesen Paßbohrungen stecken Paßstifte, die nach der Montage in entsprechende Paßbohrungen des Gehäuses (10) hineinragen.

Auf beiden Seiten der Sensorenausnehmung (75) ist jeweils eine Gewindebohrung (83) zur Befestigung des Elektronikgehäuses (110) mittels der Schrauben (119) angeordnet, vgl. Figur 1.

Das quaderförmige Elektronikgehäuse (110) ist mit einem stirnseitigen Flansch (111) am Verformungsrahmen (70) so festgeschraubt, dass sich das Gehäuse (110) bei montiertem Verformungsrahmen (70) oberhalb der Führungsschiene (1) befindet. Das Gehäuse (110) hat auf seiner der Führungsschiene (1) abgewandten Seite einen Deckel (112), in dem zwei Leuchtdioden (115, 116) angeordnet sind. Die eine Leuchtdiode (115) leuchtet z.B. grün, wenn die Reibgehemme (90) unbetätigt sind. Die andere Leuchtdiode (116) leuchtet z.B. rot, wenn sich das Gehäuse (10) unter der Klemmwirkung der Reibgehemme (90) meßbar verformt hat.

Selbstverständlich können dort weitere Leuchtdioden angeordnet werden, sofern weitere Betriebszustände optisch darstellbar sein sollen. U.a. ist es denkbar, verschiedene Kraftgrenzwerte auszuwerten und anzuzeigen. Sind hierbei diese Kraftgrenzwerte kleiner als die vorgegebene Maximalkraft, kann so festgestellt werden, dass z.B. nur ein Reibgehemme arbeitet, oder dass beispielsweise innerhalb der Vorrichtung eine klemmkraftmindernde Reibung auftritt. Auch ist es denkbar, die ermittelte Klemmkraft dazu zu benutzen, um das mit Fremdenergie betätigte Stellglied so zu regeln, dass eine bestimmte Brems- und/oder Klemmkraft eingehalten wird. Zudem ist es über eine solche Regelung möglich, die Bremsbeschleunigung der Bremsvorgänge zu variieren.

In der Nähe der Leuchtdioden (115, 116) befindet sich seitlich am Gehäuse (110) ein Anschlussstecker (118), über den zum einen die Elektronik mit Strom versorgt wird und auf den zum anderen mindestens ein Signalausgang gelegt ist. Der Signalausgang übermittelt z.B. den Betriebszustand der Brems- und/oder Klemmvorrichtung an die Steuerung der die Vorrichtung tragenden Maschine.

### Bezugszeichenliste:

- 1: Führungsschiene, doppeltrapezförmig
- 2: Führungslängsrichtung, Mittellinie
- 3, 4: Führungsflächen
- 5: Maschinenbett

- 7: Bodenfläche
- 9: Geräteschlitten

- 10: Vorrichtungsgehäuse, Gehäuse
- 11: Gehäusezone, rechts
- 12: Gehäusezone, links
- 13: Brückenzone
- 14: Umgriffsnut
- 15: Unterseite, Gehäusezugzone,
- 16: Oberseite
- 18: Stirnseite, Vorderseite
- 19: Stirnseite, Rückseite

- 23: Führungsflächenbohrung
- 24: Quetschring
- 27: Schraubenfeder für Rückhub von (95), unten
- 28: Schraubenfeder für Rückhub von (92), oben
- 29: Sicherungsring

- 31: Käfigsitzausnehmung, Ausnehmung
- 39: Mittellinie

- 41: Gehemmebohrung
- 42: Hauptbohrung
- 43: Durchdringungslinie
- 44: Druckstückführungsbohrung
- 45: Austrittsbohrung
- 46: Mittellinie

- 50: Stellglied, Zylinder-Kolben-Einheit
- 51: Führungskolben, Pneumatikkolben
- 52: Kolbendichtung, Quadring
- 54: Schraube
- 58: Druckluftanschluss

- 60: Federspeicher
- 61: Federbüchse
- 62: Federbüchsenboden
- 63: Schraubendruckfeder

- 65: Vorderseite
- 66: Rückseite
- 67: Unterseite

- 70: Verformungsrahmen, Sensoreinheit
- 71: Rechtecknut
- 72, 73: Federbüchsenausnehmungen
- 75: Sensorenausnehmung
- 76: Oberflächenzone, Zugsteg
- 77: Innenfläche, Innenseite
- 78: Oberflächenzone, Drucksteg
- 79: Innenfläche, Innenseite

- 81, 82: Befestigungsbohrungen
- 83: Verschraubungsbohrung
- 84: Sacklochbohrung für Paßstifte, Paßbohrung
- 85: Dehnmeßstreifen in Zugzone
- 86: Dehnmeßstreifen in Druckzone
- 89: Zylinderschrauben

- 90: Reibgehemme
- 91: Einstellschraube
- 92: Schiebekeil
- 93: Keilfläche
- 94: Stützfläche
- 95: Käfig
- 96: Druckstück
- 98: Rückhubring, elastisch
- 99: Reibbacke
- 106: Zylinderrolle, außenliegend
- 107: Zylinderrolle, innenliegend

- 110: Elektronikgehäuse, Sensoreinheit
- 111: Gehäuseflansch
- 112: Deckel
- 115: LED für die Offenstellung
- 116: LED für die Geschlossenstellung
- 118: Anschluss, elektrisch
- 119: Befestigungsschrauben

## Patentansprüche

1. Brems- und/oder Klemmvorrichtung eines an mindestens einer Führungsschiene (1) geführten Schlittens,
- wobei die Vorrichtung mindestens ein über ein Getriebe (91, 92, 96) betätigbares Reibgehemme (90) umfasst, das wenigstens eine, in einem Vorrichtungsgehäuse (10) gelagerte, an die Führungsschiene (1) anpressbare Reibbacke (99) aufweist,
- wobei das mit Hilfe von Fremdenergie bewegte Getriebe (91, 92, 96) zur Be- und zur Entlastung des Reibgehemmes (90) pro Be- und Entlastungsrichtung mittels mindestens eines Stellgliedes (50) oder mittels eines Federsystems, das mindestens ein Federelement (63) umfasst, bewegbar ist,
**dadurch gekennzeichnet,**
- **dass** das elastisch verformbare Vorrichtungsgehäuse (10) oder elastisch verformbare, angebaute Teile (70) des Vorrichtungsgehäuses (10) mindestens eine Oberflächenzone (76, 78) aufweisen, die sich beim Aufbringen einer Brems- und oder Klemmkraft dehnen, stauchen oder tordieren und
- **dass** in mindestens einer der verformbaren Oberflächenzonen (76, 78) mindestens ein Dehnmeßstreifen (85, 86) angeordnet ist.

2. Vorrichtung gemäß Anspruch 1, **dadurch gekennzeichnet, dass** mindestens zwei Dehnmeßstreifen (85, 86) in einem am Vorrichtungsgehäuse (10) anbaubaren Verformungsrahmen (70) angeordnet sind.

3. Vorrichtung gemäß Anspruch 2, **dadurch gekennzeichnet, dass** der Verformungsrahmen (70) mindestens zwei Verformungszonen (76, 78) als Träger von jeweils mindestens einem Dehnmeßstreifen (85, 86) aufweist, von denen mindestens einer auf Zug und mindestens einer auf Druck beanspruchbar ist.

4. Vorrichtung gemäß Anspruch 2, **dadurch gekennzeichnet, dass** der Verformungsrahmen (70) eine Sensorenausnehmung (75) aufweist, an deren Innenflächen (77, 79) die Dehnmeßstreifen (85, 86) geschützt angeordnet sind.

5. Vorrichtung gemäß Anspruch 4, **dadurch gekennzeichnet, dass** die Sensorenausnehmung (75) die Form eines bodenfreien Langloches hat.

6. Vorrichtung gemäß Anspruch 2, **dadurch gekennzeichnet, dass** der Verformungsrahmen (70) an einer der beiden Stirnseiten (18, 19) des Vorrichtungsgehäuses (10), zumindest jedoch an zwei Stellen, spielfrei form- oder kraftschlüssig befestigt ist.

7. Vorrichtung gemäß Anspruch 1, **dadurch gekennzeichnet, dass** die Elektronik zur Auswertung der Widerstandsänderung der verformten Dehnmeßstreifen (85, 86) in einem separaten Elektronikgehäuse (110) untergebracht ist.

8. Vorrichtung gemäß Anspruch 7, **dadurch gekennzeichnet, dass** das Elektronikgehäuse (110) am Verformungsrahmen (70) angeordnet ist.

9. Vorrichtung gemäß Anspruch 1, **dadurch gekennzeichnet, dass** mindestens ein Dehnmeßstreifen einer Vollbrückenschaltung zum Verhindern einer meßwertverfälschenden Temperaturabhängigkeit in einem betriebsbedingt unverformbaren Bereich des Elektronikgehäuses (110) angeordnet ist.

10. Vorrichtung gemäß Anspruch 1, **dadurch gekennzeichnet, dass** die sich die Oberflächenzone (76, 78) beim Aufbringen einer Brems- und oder Klemmkraft im ein- bis dreistelligen Mikrometerbereich verformen.

## Claims

1. A braking and/or clamping device of a carriage guided on at least one guiderail (1),
- wherein the device comprises at least one friction pad (90), which can be activated via a gearbox (91, 92, 96) and has at least one friction jaw (99) that is mounted in a device housing (10) and can be pressed against the guiderail (1),
- wherein the gearbox (91, 92, 96) moved with the help of external energy can be moved by means of at least one actuator (50) or by means of a spring system comprising at least one spring element (63) for loading and unloading the friction pad (90) per loading and unloading direction,
**characterized in that**
- the elastically deformable device housing (10) or elastically deformable attached parts (70) of the device housing (10) have at least one surface zone (76, 78) that expands, compresses, or twists when exposed to a braking and/or clamping force, and that
- at least one strain gage (85, 86) is arranged in at least one of the deformable surface zones (76, 78) .

2. The device according to claim 1, **characterized in that** at least two strain gages (85, 86) are arranged in a deformation frame (70) that can be attached to the device housing (10).

3. The device according to claim 2, **characterized in that** the deformation frame (70) has at least two deformation zones (76, 78) as carriers of a respective at least one strain gage (85, 86), of which at least one can be exposed to a tension, and at least one to a pressure.

4. The device according to claim 2, **characterized in that** the deformation frame (70) has a sensor recess (75), on whose interior surfaces (77, 79) the strain gages (85, 86) are arranged in a protected manner.

5. The device according to claim 4, **characterized in that** the sensor recess (75) is shaped like an oblong hole with a ground clearance.

6. The device according to claim 2, **characterized in that** the deformation frame (70) is positively or non-positively fastened free of play to one of the two end faces (18, 19) of the device housing (10), but at least at two locations.

7. The device according to claim 1, **characterized in that** the electronics for evaluating the change in resistance of the deformed strain gages (85, 86) are accommodated in a separate electronics housing (110).

8. The device according to claim 7, **characterized in that** the electronics housing (110) is arranged on the deformation frame (70).

9. The device according to claim 1, **characterized in that** at least one strain gage of a full bridge circuit is arranged in an operationally non-deformable area of the electronics housing (110) to prevent a measurement-falsifying temperature dependence.

10. The device according to claim 1, **characterized in that** the surface zone (76, 78) deforms within a one to three-digit micrometer range when exposed to a braking and/or clamping force.

## Revendications

1. Dispositif de freinage et/ou de serrage d'un chariot guidé au niveau d'au moins un rail de guidage (1), dans lequel
- le dispositif comprend au moins un système anti-frottement (90) actionnable par une transmission (91, 92, 96) et qui présente au moins une mâchoire de frottement (99) s'appuyant dans un boîtier de dispositif (10) et comprimable vers le rail de guidage (1),
- la transmission (91, 92, 96) déplacée à l'aide d'énergie extérieure, pour charger et décharger le système anti frottement (90) par sens de charge et de décharge, est mobile au moyen d'au moins un élément de réglage (50) ou au moyen d'un système de ressort qui comprend au moins un élément à ressort (63),
**caractérisé en ce que**
- le boîtier de dispositif déformable élastiquement (10) ou des pièces rapportées (70) déformables ce contact élastiquement du boîtier de dispositif (10) présente au moins une zone superficielle (76, 78) qui s'étire, se compacte ou se tord en cas d'application d'une force de freinage et/ou de serrage et que,
- dans au moins une des zones superficielles déformables (76, 78), au moins une bande de mesure d'étirement (85, 86) est disposée.

2. Dispositif selon la revendication 1, **caractérisé en ce qu'**au moins deux bandes de mesure d'étirement (85, 86) sont disposées dans un cadre de déformation (70) pouvant être monté au niveau du boîtier de dispositif (10) .

3. Dispositif selon la revendication 2, **caractérisé en ce que** le cadre de déformation (70) présente au moins deux zones de déformation (76, 78) servant de supports respectivement d'au moins une bande de mesure d'étirement (85, 86) dont au moins une peut être sollicitée à la traction et au moins une à la pression.

4. Dispositif selon la revendication 2, **caractérisé en ce que** le cadre de déformation (70) présente un évidement de détection (75) sur les surfaces intérieures (77,79) duquel les bandes de mesures d'étirement (85, 86) sont disposées en étant protégées.

5. Dispositif selon la revendication 4, **caractérisé en ce que** l'évidement de détection (75) a la forme d'un trou oblong sans fond.

6. Dispositif selon la revendication 2, **caractérisé en ce que** le cadre de déformation (70) est fixé à une des deux faces frontales (18, 19) du boîtier de dispositif (10), mais au moins à deux endroits, sans jeu et en correspondance géométrique ou mécanique.

7. Dispositif selon la revendication 1, **caractérisé en ce que** le système électronique permettant d'évaluer la modification de résistance des bandes de mesures d'étirement déformées (85, 86) est logé dans un boîtier électronique séparé (110).

8. Dispositif selon la revendication 7, **caractérisé en ce que** le boîtier électronique (110) est disposé au niveau du cadre de déformation (70).

9. Dispositif selon la revendication 1, **caractérisé en ce qu'**au moins une bande de mesure d'étirement d'un circuit en pont intégral, pour éviter une dépendance de température faussant la valeur mesurée, est disposée dans une zone indéformable suite au fonctionnement du boîtier électronique (110).

10. Dispositif selon la revendication 1, **caractérisé en ce que** la zone superficielle (76, 78), en cas d'application d'une force de freinage et/ou de serrage, se déforme dans une plage micrométrique d'un à trois chiffres.
